# EUROPEAN PATENT SPECIFICATION

(11) **EP 3 728 438 B1**
(45) Date of publication and mention of the grant of the patent: **09.08.2023**
(21) Application number: 18845455.7
(22) Date of filing: 19.12.2018
(51) Int. Cl.: C08K 5/00, C09D 161/06, C09D 161/14, C09D 183/00

(54) **COATING COMPOSITIONS COMPRISING A PHENOLIC NOVOLAK AND AN ORGANOSILANE**
BESCHICHTUNGSZUSAMMENSETZUNGEN MIT PHENOLISCHEM NOVOLAK UND ORGANOSILAN
COMPOSITIONS DE REVÊTEMENT COMPRENANT UNE NOVOLAQUE PHÉNOLIQUE ET UN ORGANOSILANE

(30) Priority: 20.12.2017 US 201715848226
(43) Date of publication of application: 28.10.2020
(73) Proprietor: PPG Industries Ohio Inc., Cleveland, OH 44111 (US)
(72) Inventor: MCVAY, Robert, Cincinnati, OH 45239 (US); MOST, Christopher L., Edgeview, KY 42017 (US); EWEN, Samantha C., Liberty Township, OH 45044 (US); MOLLEO, Max A., Loveland, OH 45140 (US)
(74) Representative: f & e patent
(86) International application number: PCT/US2018/066458
(87) International publication number: WO 2019/126301

(56) References cited:
- EP-A1- 1 333 075
- JP-A- 2002 040 663
- US-A- 4 963 602
- US-A1- 2016 264 811

## Description

### FIELD OF THE INVENTION

The present invention is directed to a coating composition comprising a phenolic novolak, and an aliphatic organosilane, wherein the composition and/or any components thereof are substantially free of BPA. The composition may optionally further comprise an acid functional material. Substrates, including packages, coated at least in part with such coating compositions or at least partially cured coatings derived thereof are also within the scope of the present invention.

### BACKGROUND OF THE INVENTION

The application of various polymeric coatings to metallic substrates, including metal cans such as food, beverage and cosmetic containers, to retard or inhibit corrosion is well established. Coatings are applied to the interior of such containers to prevent the contents from contacting the metal of the container. Contact between the metal and the food, beverage or cosmetic can lead to corrosion of the metal container, which can then contaminate the product. This is particularly true when the contents of the container are acidic in nature, such as tomato-based products and soft drinks.

Certain coatings, particularly in the packaging industry, must undergo extreme stresses in the course of preparation and use of the packaging containers. In addition to flexibility, packaging coatings may also need resistance to chemicals, solvents, and pasteurization processes used in the packaging of beer and other beverages, and may also need to withstand retort conditions commonly employed in food packaging. In addition to corrosion protection, coatings for food and beverage containers should be non-toxic, and should not adversely affect the taste of the food or beverage in the can. Resistance to "popping", "blushing" and/or "blistering" may also be desired.

Bisphenol A ("BPA") contributes to many of the properties desired in packaging coating products. The use of BPA and related products such as bisphenol A diglycidyl ether ("BADGE"), however, has recently come under scrutiny in the packaging industry. Substantially BPA-free coatings having properties comparable to coatings comprising BPA are therefore desired. A reduced use of formaldehyde in coatings is also desired.

### SUMMARY OF THE INVENTION

The present invention is directed to a coating composition comprising a phenolic novolak and an aliphatic organosilane, wherein the composition and/or any components thereof are substantially free of BPA. Substrates coated at least in part with such a coating composition are also within the scope of the present invention.

### DETAILED DESCRIPTION OF THE INVENTION

The present invention is directed to a coating composition comprising a phenolic novolak (also called novolac) and an aliphatic organosilane, wherein the composition and/or any components thereof are substantially free of BPA. It will be appreciated that the use of a phenolic-containing resin may impart certain desirable performance characteristics or qualities to a coating composition. This is particularly relevant to packaging coatings, as the industry moves away from materials comprising BPA, BADGE, diglycidyl ether and even epoxy. EP1333075 relates to a coating composition and a method for coating the inner surface of can.

A phenolic novolak will be understood as referring to an acid catalyzed phenolic resin obtained by condensation of phenolic monomer with formaldehyde with an excess of phenolic monomer to formaldehyde. Suitable exemplary phenolic novolak products that can be used according to the present invention are commercially available from Durez and Allnex. Use of a phenolic novolak or mixtures thereof in the present composition allows for the advantages of using a phenolic resin in a coating composition. This is of particular interest in the packaging industry for metal cans because phenolic polymers contribute to corrosion resistance in a wide variety of foods. Many phenol formaldehyde resins used in the coatings industry, particularly packaging coatings, are made by reacting phenol with an excess of formaldehyde. This results in high concentrations of free formaldehyde in the coating composition. This is particularly relevant in the packaging industry as in moves away from coatings comprising free formaldehyde, for example to reduce the exposure limits of those handling the materials. Because phenolic novolak is made with an excess of phenolic monomers versus formaldehyde all of the formaldehyde is theoretically consumed during the polymerization of the novolak, and there is little or no detectable free formaldehyde in the coating composition. Theoretically, phenolic novolaks do not generate formaldehyde as a byproduct under standard baking conditions of the coating. The present invention has therefore achieved the benefits of phenolic resins without the release of appreciable amounts of free formaldehyde. Phenolic novolak has the general structure: 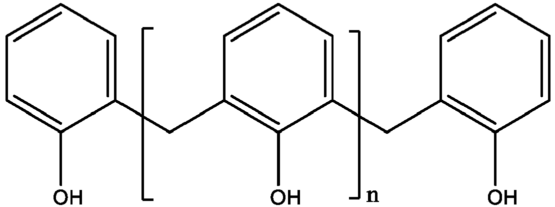 wherein "n" is 5 or greater. The phenolic novolak can comprise, for example, t-butyl phenolic novolak, which has t-butyl moieties at the ortho, meta, or para position of the phenol, or cresol novolak, which has methyl moieties at the ortho, meta, or para positions of the phenol. It will therefore be appreciated that the phenol rings shown above can each independently be substituted or unsubstituted.

An aliphatic organosilane will be understood as referring to an organic derivative of a silane having at least one carbon-silicon bond. Organosilanes may have the general formula R₄Si, wherein R is each independently an aliphatic organic moiety; that is, the organic moiety does not contain any aromaticity. An aromatic organosilane is one in which R may each independently comprise one or more aromatic rings. Examples of suitable R groups include alkoxy groups and aliphatic, cycloaliphatic and/or, if aromatic rings are desired, aromatic hydrocarbyl groups such as (cyclo)alkyl, aryl, aralkyl, etc., all of which may optionally be substituted by one or more functional groups such as alkoxy, amino, epoxy, vinyl and/or (meth)acryloxy. Combinations of different organosilanes can be used in the coating compositions of the present invention. The organosilane(s) used in the coating compositions according to the present invention may for example comprise an alkoxysilane, such as a trialkoxysilane. Typical alkoxy substituents have 1-4 carbon atoms and include methoxy, ethoxy, and isopropoxy. The organosilane used according to the present invention, such as an alkoxysilane, may include at least one organic group R (such as those indicated above) bound via a Si-C bond, which includes a functional group such as an amino, epoxy, vinyl and/or (meth)acryloxy group. The organosiloxane can, for example, comprise a compound having a structure of the general formula (X-R')ₘ -Si-(OR")₄₋ₘ, wherein m is an integer in the range of 1 to 3 (such as 1), each X is independently a functional group comprising an amino, epoxy, vinyl and/or (meth)acryloxy group, R' is a divalent organic moiety having from 1 to 20 carbon atoms, such as an alkylene group, and each R" is independently an alkyl group, such as methyl, ethyl or isopropyl. The organosilane(s) used according to the present invention may in particular comprise an amino-and/or epoxy-functional organosilane or mixtures thereof, such as an amino- and/or epoxy-functional alkoxysilane, for example an amino-and/or epoxy-functional trialkoxysilane. A particularly suitable silane is an amino-functional alkoxysilane, in which the alkoxy comprises ethoxy and/or methoxy. Any amino-functional organosilane can be used, such as those commercially available from ShinEtsu as KBE-903, KBM-903, KBM-603 and KBM-602. Another suitable organosilane is an epoxy-functional organosilane. Epoxy-functional organosilanes that can be used according to the present invention are for example commercially available from ShinEtsu as KBM-403, KBE-403, and KBM-303. Vinyl-functional organosilanes and acryloxy-functional silanes can also be used, and are for example available from ShinEtsu as KBM-1003 and KBE-1003, and KBM-5103 and KBM-503, respectively. Other particularly useful organosilanes are (meth)acryloxy functional silanes such as 3-acryloxypropyl trimethoxysilane, 3-methacryloxypropyl trimethoxysilane, 3-acryloxypropyl triethoxysilane, and 3-(triisopropoxysilyl)propyl methacrylate, which are available from ShinEtsu as KBM-5103, KBM-503, KBE-503, and from Momentive as CoatOSil 1757, respectively. These vinyl or acryloxy functional silanes may be polymerized with any other vinyl or acrylic monomers, (meth)acrylic acid, alkyl (meth)acrylates such as ethyl (meth)acrylate, methyl (meth)acrylate, and butyl (meth)acrylate, functional acrylates such as hydroxyethyl (meth)acrylate, vinyl monomers such as styrene, fumaric acid, maleic acid and acrylamides such as n-butoxy methyl acrylamide. Mixtures of organosilanes such as any of those mentioned above also can be used according to the present invention; for example, a mixture of an amino-functional organosilane and an epoxy-functional organosilane may be suitable. As noted above, the organosilane used according to the present invention may exclude a silane or organosilane having an aromatic ring. Accordingly, the organosilane may comprise, consist essentially of and/or consist of aliphatic organosilane.

As noted above, the coating compositions of the present invention comprise phenolic novolak and an organosilane. The phenolic novolak and organosilane may be incorporated separately into the coating composition, or they may be reacted prior to addition to the coating composition. For example, the alkoxy functionality of an alkoxysilane used as organosilane and the hydroxyl functionality on the phenolic novolak may react, although the inventors do not wish to be bound by that mechanism. A similar reaction may occur when the organosilane is epoxy functional or amino functional, for example. Other functionalities, such as epoxy or amine, bound to the alkoxysilane may also react with the phenolic novolak. The phenolic novolak, for example, can be heated in a flask to which is added the organosilane. Alternatively, the organosilanes can be reacted with other monomers or polymers, such as polyesters, acrylics and the like, prior to being combined with the phenolic novolak. Of particular interest, vinyl or acryloxy functional organosilanes can be reacted with other vinyl or acrylic monomers prior to reaction with the novolak. The amount of organosilane to phenolic novolak can vary, such as from 5 to 50 wt % organosilane to 50 to 95 wt % phenolic novolak, or 15 to 35 wt % organosilane to 85 to 65 wt% phenolic novolak. The coating composition according to the present invention may accordingly comprise a reaction product of the organosilane and the phenolic novolak, wherein the reaction product can be formed prior to being incorporated into the coating composition.

It will be appreciated that if the organosilane and phenolic novolak are not reacted prior to addition to the coating composition, that this reaction will occur in situ; that is, the two (or more if mixtures are used) will react during cure of the coating composition. It will be appreciated that this reaction, prior to coating composition formation, during cure of the coating composition, or both if unreacted phenolic novolak and organosilane is added to a coating composition also comprising the reaction product of these components, facilitates the cure of the coating composition, as phenolic novolak does not self-condense as other phenolic resole resins do.

The present compositions may further comprise a dispersant. A dispersant will be understood as referring to a substance that will stabilize the phenolic novolak and organosilane in an aqueous medium. A particularly suitable dispersant is an acid functional resin, which will be understood as referring to a resin, or polymer, having one or more acid functional groups such as carboxy groups, phosphoric groups, sulfonic groups and the like. This acid functionality may react during cure with the amine on an aminosilane (if the organosilane comprises aminosilane) to form an amide linkage. Examples include but are not limited to acid functional polyesters, acid functional acrylics, and the like. The acid functional groups can also catalyze the selfcondensation of the alkoxysilane functionality, if the organosilane comprises alkoxysilane.

A particularly suitable acid functional resin is an acid functional acrylic resin. The acrylic resin may be formed by using any number of acrylic monomers, (meth)acrylic acid, alkyl (meth)acrylates such as ethyl (meth)acrylate, methyl (meth)acrylate, and butyl (meth)acrylate, functional acrylates such as hydroxyethyl (meth)acrylate, vinyl monomers such as styrene, fumaric acid, maleic acid and acrylamides such as n-butoxy methyl acrylamide. For example, an acid functional monomer such as (meth)acrylic acid and an alkyl (meth)acrylate may each be used for copolymerization. The acid functional acrylic resin may for example be formed from monomers comprising (meth)acrylic acid, methyl (meth)acrylate and ethyl (meth)acrylate. Mixtures of acrylic resins can also be used. The acrylic resin used in the coating compositions should have unreacted carboxylic acid functionality. According to the present invention, the acrylic resin may exclude or be substantially free of styrene, ethyl acrylate, acrylamide and/or vinyl chloride monomers as these monomers may not be desired in certain formulations, such as those used on packaging; in this context "substantially free" means these monomers are not intentionally used in the polymerization of the acrylic resin and are therefore present, if at all, in an amount of 1 wt% or less, based on total wt% of the monomers. In addition, when using an acrylic resin in the present compositions, the acrylic resin may be substantially free of unreacted unsaturation. That is, reaction of the (meth)acrylic monomers in the formation of the acrylic resin will consume the unsaturation. Thus, the acrylic resins used according to the present invention are not radiation curable, and any residual unsaturation that might remain in the acrylic resin upon reaction of the monomers is not enough to render the acrylic resin radiation curable. Although reference is made throughout to acid functional acrylic resin, it will be understood that this term includes resins made using acrylic and/or methacrylic monomers.

When acid functionality is desired in the present coating compositions, it can be introduced through an acid functional resin, as described above. Alternatively, acid functionality can be incorporated into a molecule comprising the organosilane. For example, (meth)acryloxy functional organosilanes can be polymerized with one or more acid functional acrylic monomers to result in a polymer having both acid and alkoxysilane functionality. Under standard curing conditions, these alkoxysilane functionalities will self-condense and possibly react with the phenolic novolak to cure the coating, though the inventors do not wish to be bound by this mechanism. A coating composition "comprising acid functionality" refers to a composition having acid functionality, whether it is incorporated into the composition in separate compound such as an acid functional resin or reacted onto the organosilane. Thus, the organosilane and the acid functional resin can be the same component.

The coating compositions of the present invention can be blended together to form the coating compositions of present invention by any means known in the art. For example, the components may be blended together using heated agitation or using a Cowles blade. The amount of phenolic novolak, in the present coating compositions may be 30 wt % or greater, such as 40 wt % or greater, such as 50 wt % or greater or 60 wt % or greater, or 80 wt % or lower, such as 70 wt % or lower or 60 wt % or lower, where wt % is based on total solids weight of the composition. A wt % of 35 to 65 may be particularly suitable. The amount of organosilane in the present coating compositions may be 5 wt % or greater, 10 wt % or greater, such as 15 wt % or greater, 20 wt % or greater or 25 wt % or greater, or 30 wt % or lower, such as 25 wt % or lower or 20 wt % or lower, where wt % is based on total solids weight of the composition. A wt % of 15 to 25 may be particularly suitable. The amount of acid functional resin, if used, in the present coating compositions may be 15 wt % or greater, such as 20 wt % or greater or 30 wt % or greater, or 35 wt % or lower, such as 30 wt % or lower or 25 wt % or lower; a suitable amount may range, for example, from 1 to 35 wt %.

The coating compositions of the present invention may further contain, besides the phenolic novolak, the organosilane and the acid-functional resin, if present, one or more of several additional component(s). A particularly suitable additional component, particularly when the organosilane comprises an amino-functional silane, is epoxidized vegetable oil ("EVO"). Any suitable EVO can be used, and can either be obtained commercially or prepared by epoxidizing a vegetable oil. Vegetable oils include but are not limited to corn, cottonseed, linseed, rapeseed, tall, palm, peanut, sesame, sunflower, and soy oil. Epoxidized soy bean oil ("ESBO") is particularly suitable and is commercially available from a number of sources, such as Hallstar, as PLASTHALL ESO, and Arkema, in its VIKOFLEX line, such as VIKOFLEX 7170. ESBO and other epoxidized vegetable oils are known as plasticizers in materials using vinyl chlorides. It was surprisingly discovered that a coating composition of the present invention comprising EVO, particularly a respective composition with an acid functional acrylic resin and an amino-functional silane modified compound, imparts greater corrosion resistance to a metal substrate when such composition is cured as compared to a cured corresponding composition lacking the EVO. It will be appreciated that the epoxy in the EVO may react with amine functionality if the organosilane comprises an amino-functional organosilane. If used, the EVO can be added separately upon formulation of the coating composition or can be reacted with the organosilane before that compound is added to the composition. The amount of EVO in the present compositions, if used, can vary, such as 5 wt % or greater, 7.5 wt % or greater, 10 wt % or greater or 12 wt % or greater, and such as 20 wt % or lower or 15 wt % or lower, with wt % based on the total solids weight of the composition. A wt % of 10-12 wt% may be particularly suitable.

Other epoxidized compounds may be used alternatively or in addition to EVO according to the present invention, such as epoxidized polybutadiene.

Another suitable component that can be used in the present compositions is an amine terminated polyamide. Any amine terminated polyamide can be used according to the present invention. The polyamide can be obtained by reaction of a polyamine with a polyacid or derivative thereof such as an anhydride, for example, it can be based on a dimer acid such as a dimer fatty acid. Suitable amine values for the polyamide can vary based on the needs of the user and can range, for example from 150 to 400, such as 230 to 246 mg KOH/g, as determined by titration. The viscosity of the polyamide can also vary, and can range, for example, from 400 to 800 poise, such as 500 to 750 poise, when measured with a #3 spindle at 20 RPM by a Brookfield viscometer at 40°C. Polyamides are widely commercially available, such as from Hexion in their EPIKURE line. The amount of amine terminated polyamide in the present compositions, if used, can vary, such as 2 wt % or greater, 3.5 wt % or greater, or 5 wt % or greater, and such as 15 wt % or lower, 12.5 wt % or lower, or 10 wt % or lower, with wt % based on the total solids weight of the composition. A wt % of 3 to 12 wt% may be particularly suitable.

Another suitable component that can be used in the present compositions is shellac. Shellac is secreted by the female lac bug, and is therefore a renewable resource. Shellac is commercially available from Renshel in India, such as in solid form as RENSHEL 101. The shellac may be present in the composition in any desired amount, such as 5 wt % or greater, 10 wt % or greater, 15 wt % or greater, 20 wt % or greater or 25 wt % or greater, and such as 35 wt % or lower, 30 wt % or lower, 25 wt % or lower, 20 wt % or lower, or 15 wt % or lower, with wt % based on total solids of the coating composition. A wt % of 10 to 20 wt% may be particularly suitable if shellac is used. Any of the ranges within these parameters can be used.

Coating compositions of the present invention may also contain a silicone. Any suitable silicone can be used; particularly suitable silicones are silanol functional silsesquioxanes commercially available from Dow Chemical in their RSN line. RSN 217, for example, is a fully phenylated silanol functional silsesquioxane and with a degree of substitution of 1.0. RSN 233, for example, is a silanol functional silsesquioxane with a phenyl to methyl ratio of 1.3:1 and a degree of substitution of 1.15. RSN 255, for example, is also a silanol functional silsesquioxane with a phenyl to methyl ratio of 0.84:1 and a degree of substitution of 1.05. All of these values are as reported by the manufacturer, Dow. Other suitable silanols include linear or branched silanol terminated polysiloxane resins comprising terminal silanol groups, pendant silanol groups or those resins comprising both methyl and phenyl groups that also contain silanol functionality. Other suitable silicones include amino-modified silicone resins containing methyl or phenyl or a combination of methyl and phenyl; alkoxy modified silicone resins containing methyl or phenyl or a combination of methyl and phenyl; epoxy modified silicone resins containing methyl or phenyl or a combination of methyl and phenyl. If used, such silicones may be present in an amount of 1 wt % or greater, such as 3 wt % or greater or 5 wt % or greater, or 20 wt % or lower, such as 10 wt % or lower or 7 wt % or lower with wt % based on total solids of the coating composition; a wt % of 1 to 3 wt % may be particularly suitable.

The coating compositions of the present invention may comprise one or more solvents including water and/or organic solvents. Suitable organic solvents include glycols, glycol ether alcohols, alcohols, ketones, and aromatics, such as xylene and toluene, acetates, mineral spirits, naphthas and/or mixtures thereof. "Acetates" include the glycol ether acetates. The solvent can be a non-aqueous solvent. "Non-aqueous solvent" and like terms means that less than 50 wt% of the solvent is water. For example, less than 10 wt%, or even less than 5 wt% or 2 wt%, of the solvent can be water. It will be understood that mixtures of solvents, including water in an amount of less than 50 wt% or containing no water, can constitute a "non-aqueous solvent". The composition may be aqueous or water-based. This means that more than 50 wt% of the solvent is water. These embodiments have less than 50 wt%, such as less than 40 wt%, less than 30 wt%, less than 20 wt% or less than 15 wt% of organic solvent(s).

The coating composition may be provided in liquid form, for example as a solution or dispersion, or may be in solid particulate form, i.e. a powder coating composition. Such powder coating compositions will be appreciated as being environmentally friendly, as only water is released on cure.

If desired, the compositions can comprise other optional materials well known in the art of formulating, such as colorants, plasticizers, abrasion resistant particles, anti-oxidants, hindered amine light stabilizers, UV light absorbers and stabilizers, surfactants, flow control agents, thixotropic agents, fillers, organic cosolvents, reactive diluents, catalysts, grind vehicles, slip agents, moisture scavenger and other customary auxiliaries.

As used herein, the term "colorant" means any substance that imparts color and/or other opacity and/or other visual effect, e.g. gloss, to the composition. The colorant can be added to the coating in any suitable form, such as discrete particles, dispersions, solutions and/or flakes. A single colorant or a mixture of two or more colorants can be used in the coating compositions of the present invention. Particularly suitable for packaging coatings are those approved for food contact, such as titanium dioxide; iron oxides, such as black iron oxide; carbon black; ultramarine blue; phthalocyanines, such as phthalocyanine blue and phthalocyanine green; graphite fibrils; ferried yellow; quindo red; and combinations thereof, and those listed in Article 178.3297of the Code of Federal Regulations.

Example colorants include matting pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coating compositions by grinding or simple mixing. Colorants can be incorporated by grinding into the coating compositions by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black, carbon fiber, graphite, other conductive pigments and/or fillers and mixtures thereof. The terms "pigment" and "colored filler" can be used interchangeably.

Example dyes include, but are not limited to, those that are solvent and/or aqueous based such as acid dyes, azoic dyes, basic dyes, direct dyes, disperse dyes, reactive dyes, solvent dyes, sulfur dyes, mordant dyes, for example, bismuth vanadate, anthraquinone, perylene aluminum, quinacridone, thiazole, thiazine, azo, indigoid, nitro, nitroso, oxazine, phthalocyanine, quinoline, stilbene, and triphenyl methane.

Example tints include, but are not limited to, pigments dispersed in water-based or water-miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemicals, Inc.

As noted above, the colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions can include colorants such as pigments or dyes having an average particle size of less than 150 nm, such as less than 70 nm, or less than 30 nm. The term "average particle size" as used herein refers to the diameter of the smallest sphere that completely encloses a non-agglomerated particle, as measurable from electron micrographs, calculated as an arithmetic average value for an analysis of at least 50 individual particles. Nanoparticles can be produced by milling stock organic or inorganic pigments with grinding media having a particle size of less than 0.5 mm. Example nanoparticle dispersions and methods for making them are identified in United States Patent Number 6,875,800 B2. Nanoparticle dispersions can also be produced by crystallization, precipitation, gas phase condensation, and chemical attrition (i.e., partial dissolution). In order to minimize re-agglomeration of nanoparticles within the coating, a dispersion of resin-coated nanoparticles can be used. As used herein, a "dispersion of resin-coated nanoparticles" refers to a continuous phase in which is dispersed discreet "composite microparticles" that comprise a nanoparticle and a resin coating on the nanoparticle. Example dispersions of resin-coated nanoparticles and methods for making them are described, for example, in United States Patent Number 7,605,194 at column 3, line 56 to column 16, line 25.

In general, the colorant can be present in any amount sufficient to impart the desired visual and/or color effect. The colorant may comprise from 1 to 65 weight percent of the present compositions, such as from 3 to 40 weight percent or 5 to 35 weight percent, with weight percent based on the total weight of the compositions.

"Abrasion resistant particles" refer to particles that, when used in a coating, will impart some level of abrasion resistance to the coating as compared with the same coating lacking the particles. Suitable abrasion resistant particles include organic and/or inorganic particles. Examples of suitable inorganic particles include but are not limited to diamond particles, such as diamond dust particles, and particles formed from carbide materials; examples of carbide particles include but are not limited to titanium carbide, silicon carbide and boron carbide. Examples of further suitable inorganic particles, include but are not limited to silica; alumina; alumina silicate; silica alumina; alkali aluminosilicate; borosilicate glass; nitrides including boron nitride and silicon nitride; oxides including titanium dioxide and zinc oxide; quartz; nepheline syenite; zircon such as in the form of zirconium oxide; buddeluyite; and eudialyte. Particles of any size can be used, as can mixtures of different particles and/or different sized particles. For example, the particles can be microparticles, having an average particle size of 0.5 to 50, 0.5 to 20, 1 to 12, 1 to 10, or 3 to 6 microns, or any combination within any of these ranges. The particles can be nanoparticles, having an average particle size of less than 0.5 micron, such as 0.8 nm to less than 500 nm, 10 nm to 100 nm, or 100 nm to less than 500 nanometers, or any combination within these ranges.

Any slip agent can be used according to the present invention such as those commercially available from BYK Chemie or Dow Corning. A wax can also be used such as polyolefin wax or paraffin.

The coating compositions of the present invention and/or the components thereof may be essentially free and/or may be completely free of bisphenol A ("BPA") and compounds derived from bisphenol A, such as bisphenol A diglycidyl ether ("BADGE"). Such compounds are sometimes referred to as "BPA non intent" because BPA, including derivatives or residues thereof, are not intentionally added but may be present in trace amounts because of impurities or unavoidable contamination from the environment. The coating compositions and/or components thereof can also be substantially free and may be essentially free and/or may be completely free of bisphenol F ("BPF") and compounds derived from bisphenol F, such as bisphenol F diglycidyl ether ("BFDGE"). The coating compositions of the present invention and/or the components thereof may be substantially free, may be essentially free and/or may be completely free of epoxy groups. The coating compositions of the present invention and/or the components thereof may be substantially free, may be essentially free and/or may be completely free of diglycidyl ether groups. The term "substantially free" as used in this context means the coating composition contains less than 1000 parts per million (ppm), "essentially free" means less than 100 ppm and "completely free" means less than 20 parts per billion (ppb) of any of the above mentioned respective compounds, derivatives or residues thereof.

In addition, the compositions of the present invention and/or components thereof may be substantially free, may be essentially free and/or may be completely free of formaldehyde. The term "substantially free" as used in this context means the compositions contain, and/or release on cure, less than 1000 parts per million (ppm), "essentially free" means less than 100 ppm and "completely free" means less than 100 parts per billion (ppb) of free formaldehyde as measure by chromatography, such as HPLC. The present compositions can be applied to any substrates known in the art, for example, automotive substrates, marine substrates, industrial substrates, packaging substrates, wood flooring and furniture, apparel, electronics including housings and circuit boards and including consumer electronics such as housings for computers, notebooks, smartphones, tablets, televisions, gaming equipment, computer equipment, computer accessories, MP3 players, and the like, glass and transparencies, sports equipment including golf balls, and the like. Accordingly, the present invention is further directed to a substrate coated at least in part with any of the coating compositions described above. These substrates can be, for example, metallic or non-metallic. Metallic substrates include tin, steel, tin-plated steel, chromium passivated steel, galvanized steel, aluminum, aluminum foil. Metal sheet as used herein refers to flat metal sheet and coiled metal sheet, which is coiled, uncoiled for coating and then re-coiled for shipment to a manufacturer. Non-metallic substrates include polymeric, plastic, polyester, polyolefin, polyamide, cellulosic, polystyrene, polyacrylic, poly(ethylene naphthalate), polypropylene, polyethylene, nylon, EVOH, polylactic acid, other "green" polymeric substrates, poly(ethyleneterephthalate) ("PET"), polycarbonate, polycarbonate acrylobutadiene styrene ("PC/ABS"), wood, veneer, wood composite, particle board, medium density fiberboard, cement, stone, glass, paper, cardboard, textiles, leather both synthetic and natural, and the like. The substrate can be one that has been already treated in some manner, such as to impart visual and/or color effect. Suitable substrates can include those in which powder coatings are typically applied.

The compositions of the present invention can be applied by any means standard in the art, such as electrocoating, spraying, electrostatic spraying, dipping, rolling, brushing, and the like.

The compositions can be applied to a dry film thickness of 0.04 mils to 4 mils, such as 0.3 to 2 or 0.7 to 1.3 mils. The compositions can also be applied to a dry film thickness of 0.1 mils or greater, 0.5 mils or greater 1.0 mils or greater, 2.0 mils or greater, 5.0 mils or greater, or even thicker. In some applications, a dry film thickness of 1-20 microns, such as 2-6 microns, is desired.

The compositions of the present invention can be used alone, or in combination with one or more other compositions, such as a coating system having two or more layers. For example, the compositions of the present invention can comprise a colorant or not and can be used as a primer, basecoat, and/or top coat. For substrates coated with multiple coatings, one or more of those coatings can be coatings as described herein. The present coatings can also be used as a packaging "size" coating, wash coat, spray coat, end coat, and the like.

It will be appreciated that the compositions described herein can be either one component ("1K"), or multi-component compositions such as two component ("2K") or more. A 1K composition will be understood as referring to a composition wherein all the coating components are maintained in the same container after manufacture, during storage, etc. A 1K composition can be applied to a substrate and cured by any conventional means, such as by heating, forced air, and the like. The present compositions can also be multi-component, which will be understood as compositions in which various components are maintained separately until just prior to application. The present compositions can be thermoplastic or thermosetting.

The composition can be a clearcoat. A clearcoat will be understood as a coating that is substantially transparent or translucent. A clearcoat can therefore have some degree of color, provided it does not make the clearcoat opaque or otherwise affect, to any significant degree, the ability to see the underlying substrate. The clearcoats of the present invention can be used, for example, in conjunction with a pigmented basecoat. The clearcoat can be formulated as is known in the coatings art.

The composition may also comprise a colorant, such as a pigmented basecoat used in conjunction with a clearcoat, or as a pigmented monocoat. Such coating layers are used in various industries to impart a decorative and/or protective finish. For example, such a coating or coating system may be applied to a vehicle. "Vehicle" is used herein in its broadest sense and includes all types of vehicles, such as but not limited to cars, trucks, buses, vans, golf carts, motorcycles, bicycles, railroad cars, airplanes, helicopters, boats of any size and the like. It will be appreciated that the portion of the vehicle that is coated according to the present invention may vary depending on why the coating is being used. For example, anti-chip primers may be applied to some of the portions of the vehicle as described above. When used as a colored basecoat or monocoat, the present coatings will typically be applied to those portions of the vehicle that are visible such as the roof, hood, doors trunk lid and the like, but may also be applied to other areas such as inside the trunk, inside the door and the like especially when the compositions are formulated as sealants or adhesives; they can also be applied to those portions of the car that are in contact with the driver and/or passengers, such as the steering wheel, dashboard, gear shift, controls, door handle and the like. Clearcoats will typically be applied to the exterior of a vehicle.

The compositions of the present invention are also suitable for use as packaging coatings. The application of various pretreatments and coatings to packaging is well established. Such treatments and/or coatings, for example, can be used in the case of metal cans, wherein the treatment and/or coating may be used to retard or inhibit corrosion, provide a decorative coating, and/or provide ease of handling during the manufacturing process. Coatings can be applied to the interior of such cans to prevent the contents from contacting the metal of the container. Contact between the metal and a food or beverage, for example, can lead to corrosion of a metal container, which can then contaminate the food or beverage. This is particularly true when the contents of the can are acidic in nature. The coatings applied to the interior of metal cans also help prevent corrosion in the headspace of the cans, which is the area between the fill line of the product and the can lid; corrosion in the headspace is particularly problematic with food products having a high salt content. Coatings can also be applied to the exterior of metal cans. Certain coating compositions of the present invention are particularly applicable for use with coiled metal stock, such as the coiled metal stock from which the ends of cans are made ("can end stock"), and end caps and closures are made ("cap/closure stock"). Since coatings designed for use on can end stock and cap/closure stock are typically applied prior to the piece being cut and stamped out of the coiled metal stock, they are typically flexible and extensible. For example, such stock is typically coated on both sides. Thereafter, the coated metal stock is punched. For can ends, the metal is then scored for the "pop-top" opening and the pop-top ring is then attached with a pin that is separately fabricated. The end is then attached to the can body by an edge rolling process. A similar procedure is done for "easy open" can ends. For easy open can ends, a score substantially around the perimeter of the lid allows for easy opening or removing of the lid from the can, typically by means of a pull tab. For caps and closures, the cap/closure stock is typically coated, such as by roll coating, and the cap or closure stamped out of the stock; it is possible, however, to coat the cap/closure after formation. Coatings for cans subjected to relatively stringent temperature and/or pressure requirements should also be resistant to popping, corrosion, blushing and/or blistering.

Accordingly, the present invention is further directed to a package coated at least in part with a coating composition comprising phenolic novolak and an organosilane, wherein the composition and/or any components thereof are substantially free of BPA. This can include any of the coating compositions described above, and includes compositions in which the organosilane is an aliphatic organosilane, an aromatic organosilane or a combination thereof. The present invention is further directed to a package comprising a cured coating layer applied to at least a portion thereof, wherein the cured coating layer comprises phenolic novolak, acid functional material and organosilane material. Such cured coating layer can be, for example, deposited from the coating compositions described herein. The organosilane used in the coating compositions applied to any of the packages contemplated by the present invention may comprise, consist essentially of and/or consist of aliphatic organosilane; may comprise, consist essentially of and/or consist of aromatic organosilane; or may comprise, a mixture of aliphatic and aromatic organosilane. One or more organosilanes may be used. The presence of acid functionality in a cured film can be determined by using nuclear magnetic resonance (NMR) spectroscopy or by infrared spectroscopy (IR). The presence of organosilane in a cured film can be determined by nuclear magnetic resonance (NMR) spectroscopy or infrared spectroscopy (IR).

A "package" is anything used to contain another item, particularly for shipping from a point of manufacture to a consumer, and for subsequent storage by a consumer. A package will be therefore understood as something that is sealed so as to keep its contents free from deterioration until opened by a consumer. The manufacturer will often identify the length of time during which the food or beverage will be free from spoilage, which typically ranges from several months to years. Thus, the present "package" is distinguished from a storage container or bakeware in which a consumer might make and/or store food; such a container would only maintain the freshness or integrity of the food item for a relatively short period. "Package" as used herein means the complete package itself or any component thereof, such as an end, lid, cap and the like. For example, a "package" coated with any of the coating compositions described herein might include a metal can in which only the can end or a portion thereof is coated. A package according to the present invention can be made of metal or non-metal, for example, plastic or laminate, and be in any form. An example of a suitable package is a laminate tube. Another example of a suitable package is metal can. The term "metal can" includes any type of metal can, container or any type of receptacle or portion thereof that is sealed by the food/beverage manufacturer to minimize or eliminate spoilage of the contents until such package is opened by the consumer. One example of a metal can is a food can; the term "food can(s)" is used herein to refer to cans, containers or any type of receptacle or portion thereof used to hold any type of food and/or beverage. "Beverage can" may also be used to refer more specifically to a food can in which a beverage is packaged. The term "metal can(s)" specifically includes food cans (including beverage cans) and also specifically includes "can ends" including "E-Z open ends", which are typically stamped from can end stock and used in conjunction with the packaging of food and beverages. The term "metal cans" also specifically includes metal caps and/or closures such as bottle caps, screw top caps and lids of any size, lug caps, and the like. The metal cans can be used to hold other items as well, including, but not limited to, personal care products, bug spray, spray paint, and any other compound suitable for packaging in an aerosol can. The cans can include "two piece cans" and "three-piece cans" as well as drawn and ironed one-piece cans; such one piece cans often find application with aerosol products. Packages coated according to the present invention can also include plastic bottles, plastic tubes, laminates and flexible packaging, such as those made from PE, PP, PET and the like. Such packaging could hold, for example, food, toothpaste, personal care products and the like.

The coating can be applied to the interior and/or the exterior of the package. For example, the coating can be rollcoated onto metal used to make a two-piece food can, a three-piece food can, can end stock and/or cap/closure stock. The coating is applied to a coil or sheet by roll coating; the coating is then cured and can ends are stamped out and fabricated into the finished product, i.e. can ends. The coating could also be applied as a rim coat to the bottom of the can; such application can be by roll coating. The rim coat functions to reduce friction for improved handling during the continued fabrication and/or processing of the can. The coating can be applied to the "side stripe" of a metal can, which will be understood as the seam formed during fabrication of a three-piece can. The coating can also be applied to caps and/or closures; such application can include, for example, a protective varnish that is applied before and/or after formation of the cap/closure and/or a pigmented enamel post applied to the cap, particularly those having a scored seam at the bottom of the cap. Decorated can stock can also be partially coated externally with the coating described herein, and the decorated, coated can stock used to form various metal cans.

Metal coils, having wide application in many industries, are also substrates that can be coated according to the present invention. Coil coatings also typically comprise a colorant.

After application to the substrate, the coating composition may be cured by any appropriate means, for example thermally. In some applications a cure of 425°F or lower, such as 415 or lower or 400 or lower for 5 minutes or less, such as 4.5 minutes or less may be desired and can be achieved according to the present invention. In other applications, a longer cure time might be appropriate, such as a cure time often to twelve minutes at 380°F to 425°F. Suitable cure conditions can be determined based on the needs of the user. Accordingly, the present coatings can be used across a broad range of industries and cure conditions.

As used herein, unless otherwise expressly specified, all numbers such as those expressing values, ranges, amounts or percentages may be read as if prefaced by the word "about", even if the term does not expressly appear. Also, any numerical range recited herein is intended to include all sub-ranges subsumed therein. Singular encompasses plural and vice versa. For example, although reference is made herein to "an" acid functional acrylic resin, "an" organosilane, "a" modifying compound, "a" phenolic novolak, "a" silicone comprising at least one silanol group, and the like, one or more of each of these and any other components can be used. As used herein, the term "polymer" refers to oligomers and both homopolymers and copolymers, and the prefix "poly" refers to two or more. (Meth)acrylic, and like terms, refers to both acrylic and methacrylic. Including, for example, and like terms means including, for example, but not limited to. When ranges are given, any endpoints of those ranges and/or numbers within those ranges can be combined within the scope of the present invention. When maximum and minimum amounts are given, any such amounts can be combined to specify ranges of ingredients; any numbers within those ranges can be combined within the scope of the present invention. The word "comprising" and forms of the word "comprising", as used in this description and in the claims, does not limit the present invention to exclude any variants or additions. Additionally, although the present invention has been described in terms of "comprising", the processes, materials, and coating compositions detailed herein may also be described as "consisting essentially of" or "consisting of".

### EXAMPLES

The following examples are intended to illustrate the invention and should not be construed as limiting the invention in any way. To convert temperatures in degrees Fahrenheit to Celsius, subtract 32 and multiply by .5556.

### Example 1

| **Acrylic A Solids** | |
|---|---|
| Ethyl methacrylate | 33 wt% |
| Methyl acrylate | 36 wt% |
| Methacrylic acid | 31 wt% |
| | 100 wt% |

| **Acrylic A composition in solvent** | |
|---|---|
| Ethyl methacrylate | 671 grams |
| Methyl Acrylate | 729 grams |
| Methacrylic acid | 630 grams |
| Butanol | 2376 grams |
| t-butyl peroctoate | 99 grams |

Acrylic A was prepared in a 5 liter round bottom flask by charging butanol, heating to reflux, and adding the monomers over three hours using t- butyl peroctoate as a free radical initiator. The components were used herein in the amounts indicated above.

| **Coating Composition 1 Resin solids** | |
|---|---|
| 29-008P at 60 wt% solids in pentanol¹ | 70 wt% |
| KBM-603² | 5 wt% |
| Acrylic A at 23.5 wt % solids in water at 30% neutralization | 25 wt% |
| | 100 wt% |

| | |
|---|---|
| ¹ t-butyl phenolic novolak from Durez ² amino-fiinctional silane from ShinEtsu | |

| **Coating composition 1, final coating** | |
|---|---|
| 29-008P solution at 60% solids | 1296 grams |
| KBM-603 | 56 grams |
| Acrylic A at 23.5 wt % solids in water | 1182 grams |
| Oleic Acid | 10 grams |
| SURFYNOL 104³ | 15 grams |
| DI water | 1166 grams |
| ³ wetting aid from Air Products | |

Coating composition 1 was made by charging the 29-008P solution into a stainless steel tank and then adding the aminosilane under agitation with a paddle blade at 700 RPM. The components were allowed to mix for five minutes, after which Acrylic A solution was added. The components were mixed for 15 minutes after which the oleic acid and the SURFYNOL were added. DI water was used to adjust the viscosity to 21 seconds as measured by a #4 Ford cup and to a solids content of about 27 wt%.

### Example 2

Aminosilane modified phenolic novolaks were prepared by charging 29-008P solution in pentanol to a three liter flask equipped with a Dean Stark trap and condenser. The novolak solution was heated to 200°F and the aminosilane was added; methanol was evolved. The mixture was heated at 240°F until the methanol was removed. The same procedure was used to make the Novolak B graft The following amounts of the components were used:

| **Novolak A** graft | |
|---|---|
| 29-008P at 60 wt % solids in pentanol | 1500 grams |
| KBM-603 | 240 grams |
| | 1740 grams |

| **Novolak B** graft | |
|---|---|
| PN650 at 55 wt % solids in pentanol⁴ | 1500 grams |
| KBM-603 | 210 grams |
| | 1710 grams |

| | |
|---|---|
| ⁴ cresole novolak from Allnex | |

Coating composition 2 was prepared by neutralizing Acrylic A to 30% with dimethylethanolamine, and reducing with DI water to 30 wt% solids. Novolak A was added to the Acrylic A solution with agitation with a Cowles blade at 700 RPM. Then 25% of the DI water was added to reduce the viscosity and the product allowed to mix for 15 minutes. Novolak B was added under agitation at 700 RPM and the product allowed to mix for 15 minutes.

EPIKURE was added and mixed for 15 minutes, then the oleic acid and SURFYNOL were added. The remaining water was added to adjust the viscosity to 22 seconds as measured using a #4 Ford cup and to a solids content of about 27 wt%.

| **Coating Composition 2 Resin solids** | |
|---|---|
| Novolak A graft solids | 55 wt% |
| Novolak B graft solids | 20 wt% |
| Acrylic A at 30 wt % solids in water at 30% neutralization | 20 wt% |
| EPIKURE 3115⁵ at 80 wt % solids in butanol | 5 wt% |
| | 100 wt% |

| **Coating composition 2, final coating** | |
|---|---|
| Novolak A graft solution | 839.60 grams |
| Novolak B graft solution | 330.0 grams |
| Acrylic A at 30 wt % solids | 666.67 grams |
| EPIKURE at 80 wt % solids in butanol | 62.5 grams |
| Oleic Acid | 20 grams |
| SURFYNOL 104 | 15 grams |
| DI water | 1694 grams |
| | 3627.77 grams |

| | |
|---|---|
| ⁵ amine terminated polyamide from Hexion | |

### Example 3

### Novolak C graft

| | |
|---|---|
| 29-008P at 60 wt % solids in pentanol | 1000 grams |
| KBM-603 | 138 grams |
| ESBO | 456 grams |
| | 1594 |

| Coating composition 3 resin solids | |
|---|---|
| Novolak C graft solids | 55 wt% |
| Novolak B graft solids | 20 wt% |
| Acrylic A at 30 wt % solids in water at 30% neutralization | 20 wt% |
| EPIKURE 3115 at 80 wt % solids in butanol | 5 wt% |
| | 100 wt% |

### Coating composition 3 final coating

| | |
|---|---|
| Novolak C graft solids | 734.2 grams |
| Novolak B graft solids | 330.6 grams |
| Acrylic A at 30 wt % solids in water at 30% neutralization | 666.67 grams |
| EPIKURE 3115 at 80 wt % solids in butanol | 62.5 grams |
| Oleic acid | 20 grams |
| SURFYNOL | 15 grams |
| DI water | 1694 grams |
| | 3527.47 grams |

Novolak graft C was made by charging the 29-008P solution in pentanol to a 3-liter flask equipped with a Dean Stark trap. The novolak solution was heated to 200°F then the KBM-603 was added. Methanol was evolved. Heating was continued to 240°F until all the methanol was removed. The ESBO was added once the novolak solution reached 240°F and was held there for two hours.

Coating composition 3 was prepared by neutralizing Acrylic A to 30% with dimethylethanolamine, and reducing with DI water to 30 wt% solids. Novolak C was added to the Acrylic A solution with agitation with a Cowles blade at 700 RPM. Then 25% of the DI water was added to reduce the viscosity and the product allowed to mix for 15 minutes. Novolak B was added under agitation at 700 RPM and the product allowed to mix for 15 minutes. EPIKURE was added and mixed for 15 minutes, then the oleic acid and SURFYNOL were added. The remaining water was added to adjust the viscosity to 22 seconds as measured using a #4 Ford cup and to a solids content of about 27 wt%.

### Example 4

Coating Composition 4 was made as generally described above in the context of Example 3, with the shellac added with a Cowles blade at 600 RPM after the Acrylic A was reduced to 30 wt % solids.

| **Coating Composition 4 Resin solids** | |
|---|---|
| Novolak A graft solids | 45 wt% |
| Novolak B graft solids | 25 wt% |
| Acrylic A at 30 wt % solids in water at 30% neutralization | 20 wt% |
| Shellac at 50 wt % solids in butanol | 10 wt% |
| | 100 wt% |

| **Coating composition 4, final coating** | |
|---|---|
| Novolak A graft solution | 687.00 grams |
| Novolak B graft solution | 413.00 grams |
| Acrylic A at 30% solids | 666.67 grams |
| Shellac at 50% solids in butanol | 200 grams |
| Oleic Acid | 20 grams |
| SURFYNOL 104 | 15 grams |
| DI water | 1694 grams |
| | 3695.67 grams |

### Example 5

An epoxy silane modified novolak was prepared by charging 29-008P in pentanol to a three liter flask equipped with a Dean Stark trap and condenser. The novolak solution was heated to 200°F and the epoxy silane was added; methanol was evolved. The mixture was heated at 240°F until the methanol was removed.

| Novolak D graft | |
|---|---|
| 29-008P at 60 wt % solids in pentanol | 1000 grams |
| KBM-403⁷ | 132 grams |
| | 1132 grams |

| | |
|---|---|
| ⁷ epoxy-functional organosilane from ShinEtsu | |

Coating Composition 5 was prepared by neutralizing Acrylic A to 30% with dimethylethanolamine, and reduced with DI water to 30 wt% solids. Novolak A was added to Acrylic A solution with agitation with a Cowles blade at 700 RPM. Then was added 25% of the DI water to reduce the viscosity and the product was allowed to mix for 15 minutes. Novolak D was added under agitation at 700 RPM and the product allowed to mix for 15 minutes. EPIKURE was added and mixed for 15 minutes, then the oleic acid and SURFYNOL were added. The remaining water was added to adjust the viscosity to 22 seconds as measured using a #4 Ford cup and to a solids content of 27 wt%.

| Coating Composition 5 Resin solids | |
|---|---|
| Novolak A graft solids | 55 wt% |
| Novolak D graft solids | 20 wt% |
| Acrylic A at 30 wt % solids in water at 30% neutralization | 20 wt% |
| EPIKURE 3115 at 80 wt % solids in butanol | 5 wt% |
| | 100 wt% |

| Coating composition 5, final coating | |
|---|---|
| Acrylic A at 30% solids | 666.7 grams |
| Novolak A graft solution | 839.7 grams |
| Novolak D graft solution | 309.3 grams |
| EPIKURE 3115 at 80% solids in butanol | 62.5 grams |
| Oleic Acid | 20 grams |
| SURFYNOL 104 | 15 grams |
| DI water | 1790.5 grams |
| | 3703.7 grams |

### Example 6

Coating compositions 1-5 were airless spray applied to the inside of 300x407 cans at 300mgs and baked for five minutes in an inside bake oven at a peak metal temperature of 425°F on the upper side wall. All of the coatings were found to have over 100 MEK double rubs as measured by placing a cotton cloth over the rounded end of a Ball PEEN Hammer then soaking it with methyl ethyl ketone and rubbing the baked panel with the weight of the hammer and the M.E.K. soaked cloth. All of the coatings passed steam process for one hour at 250°F with no blush or adhesion loss upon crosshatch and taping. Steam process is a test where the baked cans were placed inside of a steam retort and steam was heated to 250°F to test the film for blush, a whitening of the film, or adhesion loss after scratching through the film with a razor blade in a crosshatch pattern.

### Example 7

To demonstrate the beneficial effect of the organosilane with the phenolic novolak, 5.0g PN-650/60B phenolic novolak were combined with 5.0g n-Butanol to reduce the total solids content to 30%. This solution was drawn onto a panel of steel with an 18# drawdown bar, and cured in a box oven at 425°F for 5 minutes. The PN-650/60B did not form a continuous film, and the resulting phenolic material was easily wiped away with < 2 MEK double-rubs. This demonstrates that the phenolic novolak alone does not form a coating film having any integrity without the organosilane.

### Example 8

1550g PN-650/60B was reduced to 54% solids with butanol and combined with 238g 3-aminopropyltrimethoxysilane (purchased as KBM-903 from Shin-Etsu). This material was heated up to 240°F over 40 minutes. A combination of methanol and butanol were distilled off, totaling approximately 92g, and the resulting material was cooled down to room temperature and diluted to 55% solids with butanol.

10g of the novolak/silane above were combined with 17.5g n-butanol to reduce the total solids content to 20%. This solution was drawn onto a panel of steel with an 18# drawdown bar, and cured in a box oven at 425°F for 5 minutes. The silane-modified PN-650/60B formed a continuous film, and the resulting coating 100+ MEK double-rubs with only slight mar observed.

### Example 9

This example demonstrates use of a polymeric organosilane.

| **Organosilane Acrylic Solids** | |
|---|---|
| 3-(Trimethoxysilyl)propyl Methacrylate | 75 wt% |
| Methyl methacrylate | 8 wt% |
| n-Butyl Acrylate | 17 wt% |
| | 100 wt% |

| **Organosilane Acrylic composition in solvent** | |
|---|---|
| 3-(Trimethoxysilyl)propyl Methacrylate | 290 grams |
| Methyl methacrylate | 30 grams |
| n-Butyl Acrylate | 67 grams |
| Isopropanol | 45 grams |
| Butanol | 350 grams |
| T butyl peroctoate | 9 grams |

Organosilane acrylic was prepared in a 1 liter round bottom flask by charging butanol and isopropanol, heating to reflux, and adding the monomers over three hours using T butyl peroctoate as a free radical initiator. The final Mw was 27,800 Daltons, and the final viscosity of the alkoxysilane acrylic in solution was 180cP at 25°C using a Brookfield Viscometer and #4 spindle at 10RPM.

### Formulations:

| Coating Composition | 9 | 10 | 11 |
|---|---|---|---|
| Acrylic A | 6.7 grams | 6.7 grams | 6.7 grams |
| PN-650/60B, 55% Solids in Butanol | 10.3 grams | 12.9 grams | 15.5 grams |
| Alkoxysilane Acrylic | 12.8 grams | 9.6 grams | 6.4 grams |
| DMEA | 0.3 grams | 0.3 grams | 0.3 grams |
| Deionized Water | 25.1 grams | 30.5 grams | 31.1 grams |

These formulations were drawn onto a steel substrate with an 18# drawdown bar, and cured in a box oven at 425°F for 5 minutes.

| Coating Composition | 9 | 10 | 11 |
|---|---|---|---|
| Final solids content | 27.2 wt% | 25 wt% | 25 wt% |
| Alkoxysilane Acrylic : Novolak | 40:40 | 30:50 | 20:60 |
| MEK Double Rubs | 50 | 100+ | 100+ |

The above example demonstrates that a coating composition wherein the silane and acid functionality are contained on the same resin results in a cured coating with solvent resistance.

### Example 10

This example demonstrates the organosilane and acid functionality can reside on the same material. It also demonstrates that a polymeric organosilane can be combined with a phenolic novolak in an organic or aqueous medium and following cure, form a durable coating suitable for a package, such as a metal can for food.

| **Acid- and Organosilane- Acrylic Solids** | |
|---|---|
| 3-(Triisopropoxysilyl)propyl Methacrylate | 25 wt% |
| Methyl Acrylate | 25 wt% |
| Ethyl Methacrylate | 30 wt% |
| Methacrylic Acid | 20 wt% |
| | 100 wt% |

| **Acid- and Organosilane- Acrylic composition in solvent** | |
|---|---|
| 3-(Triisopropoxysilyl)propyl Methacrylate | 98 grams |
| Methyl Acrylate | 95 grams |
| Ethyl Methacrylate | 115 grams |
| Methacrylic Acid | 78 grams |
| Isopropanol | 77 grams |
| Butanol | 393 grams |
| Butyl Cellosolve | 14 grams |
| T butyl peroctoate | 9 grams |

Acid- and Alkoxysilane-Acrylic was prepared in a 1 liter round bottom flask by charging butanol and isopropanol, heating to reflux, and adding the monomers over three hours using T butyl peroctoate as a free radical initiator. The final Mw was 39.149 Daltons, and the final viscosity of the alkoxysilane acrylic in solution was 1472cP at 25°C using a Brookfield Viscometer and #6 spindle at 10RPM.

| Coatings Composition | 12 | 13 |
|---|---|---|
| Acid- and Alkoxysilane-Acrylic | 10 grams | 10 grams |
| PN-650/60B, 55% Solids in Butanol | 6.6 grams | 6.6 grams |
| n-Butanol | 0 grams | 15.1 grams |
| Dimethylethanolamine | 0.2 grams | 0 grams |
| Deionized Water | 14.9 grams | 0 grams |

These formulations were drawn onto steel substrates with an 18# drawdown bar and cured in a box oven at 425°F for 5 minutes.

| Coatings Composition | 12 | 13 |
|---|---|---|
| Final solids content | 25 wt% | 25 wt% |
| Acid- and Alkoxysilane-Acrylic: Novolak | 50:50 | 50:50 |
| MEK Double Rubs | 100+ | 100+ |

## Claims

1. A coating composition comprising a phenolic novolak and an aliphatic organosilane, wherein the composition and/or any components thereof are substantially free of BPA, i.e., contain less than 1000 ppm thereof.

2. The coating composition of Claim 1, wherein the organosilane comprises an acid-, amino-, acryloxy-, vinyl-, and/or epoxy-functional organosilane or mixtures thereof, such as an acid-, acryloxy-, vinyl-,amino- and/or epoxy-functional alkoxysilane, for example an acid-, acryloxy-, vinyl-, amino-and/or epoxy-functional trialkoxysilane.

3. The coating composition of Claim 1, further comprising a dispersant.

4. The coating composition of Claim 1, wherein the phenolic novolak and the organosilane are present in the coating composition in the form of a reaction product of the phenolic novolak and the organosilane, wherein the reaction product may be formed prior to being incorporated into the coating composition.

5. The coating composition of Claim 1, further comprising an epoxidized vegetable oil.

6. The coating composition of Claim 3, where the dispersant comprises an acid functional resin, such as an acid-functional acrylic resin.

7. The coating composition of Claim 1, wherein the phenolic novolak comprises a t-butyl phenolic novolak, a cresol novolak, or mixtures thereof.

8. The coating composition of Claim 1, further comprising an acid functional resin.

9. The coating composition of Claim 1, wherein the composition is aqueous.

10. A substrate coated at least in part with the coating composition of Claim 1 or an at least partially cured coating derived therefrom.

11. A package coated at least in part with a coating composition comprising a phenolic novolak and an organosilane or an at least partially cured coating derived therefrom, wherein the composition and/or any components thereof are substantially free of BPA, i.e., contain less than 1000 ppm thereof.

12. The package of Claim 11, wherein the package is a metal can.

13. The package of Claims 11 or 12, wherein the coating composition is applied to at least a portion of the inside of the package.

14. The package of Claims 11-13, wherein the organosilane comprises aliphatic organosilane.

15. The package of Claims 11-13, wherein the organosilane comprises aliphatic organosilane, aromatic organosilane, or combinations thereof.

## Patentansprüche

1. Eine Beschichtungszusammensetzung umfassend ein Phenol-Novolak und ein aliphatisches Organosilan, wobei die Zusammensetzung und/oder jegliche Komponenten derselben im Wesentlichen frei von BPA sind, d.h. weniger als 1.000 ppm davon enthalten.

2. Die Beschichtungszusammensetzung gemäß Anspruch 1, wobei das Organosilan ein säure-, amino-, acryloxy-, vinyl- und/oder epoxyfunktionelles Organosilan oder Mischungen derselben, wie etwa ein säure-, acryloxy-, vinyl-, amino- und/oder epoxyfunktionelles Alkoxysilan, zum Beispiel ein säure-, acryloxy-, vinyl-, amino- und/oder epoxyfunktionelles Trialkoxysilan umfasst.

3. Die Beschichtungszusammensetzung gemäß Anspruch 1, des Weiteren umfassend ein Dispergiermittel.

4. Die Beschichtungszusammensetzung gemäß Anspruch 1, wobei das Phenol-Novolak und das Organosilan in der Beschichtungszusammensetzung in Form eines Reaktionsprodukts des Phenol-Novolaks und des Organosilans vorhanden sind, wobei das Reaktionsprodukt vor dem Einbringen in die Beschichtungszusammensetzung gebildet werden kann.

5. Die Beschichtungszusammensetzung gemäß Anspruch 1, des Weiteren umfassend ein epoxidiertes Pflanzenöl.

6. Die Beschichtungszusammensetzung gemäß Anspruch 3, wobei das Dispergiermittel ein säurefunktionelles Harz, wie etwa ein säurefunktionelles Harz umfasst

7. Die Beschichtungszusammensetzung gemäß Anspruch 1, wobei das Phenol-Novolak ein t-Butylphenol-Novolak, ein Kresol-Novolak oder Mischungen derselben umfasst.

8. Die Beschichtungszusammensetzung gemäß Anspruch 1, des Weiteren umfassend ein säurefunktionelles Harz.

9. Die Beschichtungszusammensetzung gemäß Anspruch 1, wobei die Zusammensetzung wässrig ist.

10. Ein Substrat zumindest teilweise mit einer Beschichtungszusammensetzung gemäß Anspruch 1 oder einer zumindest teilweise gehärteten daraus hergestellten Beschichtung beschichtet.

11. Eine Verpackung zumindest teilweise mit einer Beschichtungszusammensetzung umfassend ein Phenol-Novolak und ein Organosilan oder einer zumindest teilweise gehärteten daraus hergestellte Beschichtung beschichtet, wobei die Zusammensetzung und/oder jegliche Komponenten derselben im Wesentlichen frei von BPA sind, d.h. weniger als 1.000 ppm davon enthalten.

12. Die Verpackung gemäß Anspruch 11, wobei die Verpackung eine Metalldose ist.

13. Die Verpackung gemäß Anspruch 11 oder 12, wobei die Beschichtungszusammensetzung auf mindestens einem Teil der Innenseite der Verpackung aufgebracht ist.

14. Die Verpackung gemäß den Ansprüchen 11 bis 13, wobei das Organosilan aliphatisches Organosilan umfasst.

15. Die Verpackung gemäß den Ansprüchen 11 bis 13, wobei das Organosilan aliphatisches Organosilan, aromatisches Organosilan oder Kombinationen derselben umfasst.

## Revendications

1. Composition de revêtement comprenant une novolaque phénolique et un organosilane aliphatique, dans laquelle la composition et/ou tous ses composants est/sont essentiellement exempt(e/s) de BPA, c'est-à-dire en contient/contiennent moins de 1 000 ppm.

2. Composition de revêtement selon la revendication 1, dans laquelle l'organosilane comprend un organosilane à fonction acide, amino, acryloxy, vinyle, et/ou époxy ou des mélanges de tels organosilanes, tel qu'un alcoxysilane à fonction acide, acryloxy, vinyle, amino et/ou époxy, par exemple un trialcoxysilane à fonction acide, acryloxy, vinyle, amino et/ou époxy.

3. Composition de revêtement selon la revendication 1, comprenant en outre un dispersant.

4. Composition de revêtement selon la revendication 1, dans laquelle la novolaque phénolique et l'organosilane sont présents dans la composition de revêtement sous la forme d'un produit de réaction de la novolaque phénolique et de l'organosilane, le produit de réaction pouvant être formé avant d'être incorporé dans la composition de revêtement.

5. Composition de revêtement selon la revendication 1, comprenant en outre une huile végétale époxydée.

6. Composition de revêtement selon la revendication 3, dans laquelle le dispersant comprend une résine à fonction acide, telle qu'une résine acrylique à fonction acide.

7. Composition de revêtement selon la revendication 1, dans laquelle la novolaque phénolique comprend une novolaque tert-butylphénolique, une novolaque crésolique, ou des mélanges de celles-ci.

8. Composition de revêtement selon la revendication 1, comprenant en outre une résine à fonction acide.

9. Composition de revêtement selon la revendication 1, dans laquelle la composition est aqueuse.

10. Subjectile revêtu au moins en partie avec la composition de revêtement selon la revendication 1 ou avec un revêtement au moins partiellement durci, issu de celle-ci.

11. Emballage revêtu au moins en partie avec une composition de revêtement comprenant une novolaque phénolique et un organosilane ou un revêtement au moins partiellement durci, issu de celle-ci, dans lequel la composition et/ou tous ses composants est/sont essentiellement exempt(e/s) de BPA, c'est-à-dire en contient/contiennent moins de 1 000 ppm.

12. Emballage selon la revendication 11, dans lequel l'emballage est une boîte métallique.

13. Emballage selon la revendication 11 ou 12, dans lequel la composition de revêtement est appliquée sur au moins une partie de l'intérieur de l'emballage.

14. Emballage selon les revendications 11-13, dans lequel l'organosilane comprend un organosilane aliphatique.

15. Emballage selon les revendications 11-13, dans lequel l'organosilane comprend un organosilane aliphatique, un organosilane aromatique, ou des associations de ceux-ci.
